# FASCICULE DE BREVET EUROPEEN

(11) **EP 3 297 856 B1**
(45) Date de publication et mention de la délivrance du brevet: **03.07.2019**
(21) Numéro de dépôt: 16723742.9
(22) Date de dépôt: 19.05.2016
(51) Int. Cl.: B60C 15/00, B60C 15/06, B60C 15/05

(54) **PNEUMATIQUE AYANT UNE PLUS GRANDE RÉSISTANCE AU DÉCOINCEMENT**
REIFEN MIT HÖHEREM WIDERSTAND GEGENÜBER WULSTABDRÜCKEN
TYRE WITH GREATER RESISTANCE TO UNSEATING

(30) Priorité: 21.05.2015 FR 1554540
(43) Date de publication de la demande: 28.03.2018
(73) Titulaire: Compagnie Générale des Etablissements Michelin, 63000 Clermont-Ferrand (FR)
(72) Inventeur: BORDOZ, Francis, 63100 Clermont-Ferrand (FR)
(74) Mandataire: Millanvois, Patrick Jacques Jean
(86) Numéro de dépôt international: PCT/EP2016/061193
(87) Numéro de publication internationale: WO 2016/184937

(56) Documents cités:
- EP-A1- 0 168 754
- WO-A1-2011/104074
- FR-A1- 2 773 518

## Description

### DOMAINE DE L'INVENTION

La présente invention concerne les pneumatiques pour tout type de véhicule, plus particulièrement les pneumatiques à basse pression. Par basse pression, on entend, par exemple et de façon non exhaustive, une pression de l'ordre de 1.5 bar pour un pneumatique de véhicule de tourisme, de 1.2 bar pour un pneumatique de véhicule de tourisme de type sportif et de 0.6 bar pour un véhicule agraire. Cette basse pression peut être la conséquence d'une perte d'étanchéité ou le résultat d'un choix délibéré pour l'obtention d'une performance particulière, telle que, par exemple, l'adhérence pour un véhicule de tourisme de type sportif.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets.

### ARRIERE-PLAN

La facilité avec laquelle un pneumatique décoince, c'est-à-dire avec laquelle le bourrelet du pneumatique se déplace sur la jante, puis déjante, c'est-à-dire se détache de la jante lorsque qu'un effort transversal s'exerce sur le pneumatique, fait partie des caractéristiques importantes du pneumatique pour la sécurité des passagers du véhicule.

Le décoincement est plus particulièrement un problème pour les pneumatiques à basse pression suivants :
- Les pneumatiques pour véhicules de type sportif dont on cherche à améliorer l'adhérence par une aire de contact augmentée en diminuant la pression d'usage,
- Les pneumatiques pour les véhicules agricoles dont on cherche à diminuer l'impact sur le compactage des sols cultivés en diminuant la pression d'usage,
- Les pneumatiques de tourisme conçus pour fonctionner sur quelques centaines de kilomètres après une perte de pression.

Par exemple, pour les véhicules de tourisme, les organismes de normalisation ont élaboré, vis-à-vis du décoincement et du déjantage, des valeurs cibles à atteindre (comme par exemple dans la norme chinoise GB/T 2978-2008) et des méthodes de test correspondantes (comme par exemple la méthode préconisée dans la norme chinoise GB/T 4502-2009). Un exemple de méthode de test est aussi décrit dans le brevet US 3 662 597 selon lequel une forme conique est appliquée contre un flanc du pneumatique. La pression exercée contre le flanc est ensuite augmentée et le déplacement du flanc est enregistré. Une méthode d'essai similaire a été retenue dans le « Fédéral Motor Vehicle Safety Standard No.109 » de la NHTSA (National Highway Traffic Safety Administration), l'organisme fédéral de sécurité routière américain.

Ces préconisations de plus en plus exigeantes des organismes de normalisation, nécessitent de rendre ces pneumatiques encore plus résistants au décoincement et au déjantage.

Classiquement, on peut augmenter la résistance au décoincement en collant le pneumatique sur la jante de montage, mais cette solution a pour inconvénient de rendre très difficile le démontage du pneumatique. Il est également possible de modifier la géométrie de la jante et du pneumatique comme le montrent les documents EP103346 B1 ou EP1307351 B1 **ou** EP358490 A2**,** EP0168754 A1 afin de rendre le décoincement plus difficile, mais cette approche nécessite une déstandardisation de la jante et parfois une modification coûteuse des moules de fabrication des pneumatiques.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

L'expression «mélange caoutchouteux » désigne une composition de caoutchouc comportant au moins un élastomère et une charge.

### RESUME DE L'INVENTION

L'objectif principal de la présente invention est donc d'augmenter la résistance au décoincement d'un pneumatique sans rendre le montage et le démontage plus difficiles, et sans nécessiter une modification des jantes de montage utilisées habituellement.

Cet objectif est atteint par un pneumatique destiné à être monté sur une jante de montage, comprenant :
deux bourrelets, destinés à entrer en contact avec la jante de montage,
chaque bourrelet, ayant un point le plus radialement intérieur, une largeur axiale au seat D, et une face externe constituée par la surface du pneumatique en contact avec l'extérieur du pneumatique et appartenant au bourrelet, et chaque bourrelet comportant au moins un bourrage constitué par au moins une composition caoutchouteuse et au moins un élément circonférentiel de renforcement dit principal,
la section méridienne de l'élément circonférentiel de renforcement principal ayant un point le plus radialement intérieur, un point le plus radialement extérieur et un point le plus axialement intérieur, le point le plus radialement intérieur étant positionné à une distance radiale Z et à une distance axiale Y du point le plus radialement intérieur du bourrelet,
la largeur axiale au seat D étant mesurée entre le point le plus radialement intérieur du bourrelet et le point d'intersection entre une première droite tangente à la projection axiale extérieure du point le plus radialement intérieur de l'élément circonférentiel de renforcement principal et une deuxième droite tangente à la projection radiale intérieure du point le plus axialement extérieur de l'élément circonférentiel de renforcement principal,
une armature de carcasse reliant les deux bourrelets et comprenant au moins une couche de carcasse s'étendant dans chaque bourrelet, radialement vers l'intérieur, jusqu'à une extrémité de couche de carcasse,
pour au moins un bourrelet, l'extrémité de couche de carcasse étant radialement à l'intérieur du point de plus grande largeur axiale (SM) du pneumatique et axialement à l'extérieur du point le plus axialement intérieur de l'élément circonférentiel de renforcement principal,
pour ledit bourrelet, le rapport Y/D entre la distance axiale Y du point le plus radialement intérieur de l'élément circonférentiel de renforcement principal au point le plus radialement intérieur du bourrelet, et la largeur axiale du bourrelet au seat D, étant au moins égal à 0,5,
pour ledit bourrelet, le rapport Z/D entre la distance radiale Z du point le plus radialement intérieur de l'élément circonférentiel de renforcement principal au point le plus radialement intérieur du bourrelet, et la largeur axiale du bourrelet au seat D, étant au plus égal à 0.4,
ledit bourrelet comprenant une armature de talon, constituée d'au moins une couche de talon, entourant le bourrage, de telle sorte que l'extrémité la plus axialement extérieure de la couche de talon est radialement extérieure à l'extrémité la plus radialement intérieure de la couche de carcasse, et de telle sorte que l'extrémité la plus axialement intérieure de la couche de talon est au moins radialement extérieure au point le plus radialement intérieur de l'élément circonférentiel de renforcement principal,
pour ledit bourrelet, les points de l'armature de talon, positionnés radialement à l'intérieur du point le plus radialement intérieur de l'élément circonférentiel de renforcement principal, étant positionnés, par rapport à la face externe du bourrelet, à une distance maximale au plus égale à Z/2, la moitié de la distance radiale Z entre le point le plus radialement intérieur du bourrelet et le point le plus radialement intérieur de l'élément circonférentiel de renforcement principal,
ledit bourrelet comprenant au moins un élément circonférentiel de renforcement additionnel, axialement intérieur au point le plus axialement intérieur de l'élément circonférentiel de renforcement principal, radialement extérieur à une partie la plus radialement intérieure de l'armature de talon et radialement intérieur au point le plus radialement extérieur de l'élément circonférentiel de renforcement principal.

Pour un pneumatique pour lequel un sens de montage est imposé, une solution possible est de n'appliquer l'invention que sur un des bourrelets, celui qui est positionné côté extérieur véhicule. Le bourrelet situé côté intérieur du véhicule est en effet soit soumis à un effort de décoincement plus faible en raison des transferts de charge du véhicule en virage, soit soumis à un effort opposé au décoincement.

Dans le bourrelet selon l'art antérieur, le décoincement s'effectue sous un effort latéral s'exerçant sur le sommet qui tire sur la couche de carcasse passant sous l'élément circonférentiel de renforcement, qui est décoincée de la jante. La force principale s'opposant à cet effort est sensiblement proportionnelle à la pression intérieure au pneumatique. Dans le cas de pneumatiques faiblement gonflés, cette force peut s'avérer insuffisante en fonction des efforts transverses appliqués et particulièrement pour les véhicules de type sportif, qui roulent à la limite de l'adhérence transversale des pneumatiques, ou pour des véhicules fortement chargés, ou sur des sols présentant des obstacles, comme par exemple des trous, des trottoirs, susceptibles d'être le lieu de chocs latéraux.

Pour augmenter l'effort latéral s'opposant au décoincement, l'homme de l'art conçoit un pneumatique, notamment pour les pneumatiques sans chambre à air, dont le plus petit diamètre est inférieur au diamètre au seat de la jante. Cela génère un effort, dit de serrage, bien connu de l'homme du métier, assurant également l'étanchéité du pneumatique. Plus l'effort de serrage est important, moins le pneumatique est sujet au décoincement mais plus il est difficile à monter.

Pour augmenter l'effort latéral s'opposant au décoincement, l'homme de l'art peut également disposer, intérieurement au point le plus radialement intérieur de la couche de carcasse la plus radialement intérieure, un coin de matériaux caoutchouteux dit pointe de gomme. Avec cette solution il augmente la largeur axiale D du bourrelet au seat. Cette pointe de gomme s'oppose par frottement sur la jante et par contact avec le hump de la jante au décoincement. Le point de contact entre la pointe de gomme et la jante devient le point de pivot autour duquel le bourrelet se déplace. Dans cette géométrie, le décoincement a lieu lorsque l'élément circonférentiel de renforcement passe axialement au-delà du point de pivot après avoir comprimé les matériaux situés entre la pointe de gomme et l'élément circonférentiel de renforcement.

La largeur axiale du bourrelet au seat D est la distance axiale entre le point le plus radialement intérieur du bourrelet et le point de raccordement entre le seat et le side du bourrelet. Le point de raccordement entre le seat et le side du bourrelet est le point d'intersection des deux droites du plan méridien, tangentes à la face externe du pneumatique ; une première droite tangente en la projection axiale extérieure du point le plus radialement intérieur de l'élément circonférentiel de renforcement principal, la deuxième droite tangente en la projection radiale intérieure du point le plus axialement extérieur de l'élément circonférentiel de renforcement principal. La largeur axiale du bourrelet au seat D est usuellement mesurée sur une coupe méridienne du pneumatique, obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé. Cette méthode de mesure s'applique également sur toutes les autres distances impliquant des points internes au pneumatique comme la distance axiale Y du point le plus radialement intérieur de l'élément circonférentiel de renforcement principal au point le plus radialement intérieur du bourrelet, la distance radiale Z du point le plus radialement intérieur de l'élément circonférentiel de renforcement principal au point le plus radialement intérieur du bourrelet.

Pour un diamètre intérieur de l'élément circonférentiel de renforcement principal donné, plus la distance entre la pointe de gomme et l'élément circonférentiel de renforcement principal est importante plus l'effort de décoincement est important. Selon l'invention, positionner le point le plus radialement intérieur de l'élément circonférentiel de renforcement principal à une distance radiale Z et une distance axiale Y du point le plus radialement intérieur du bourrelet et telle que Y/D est au moins égal à 0.5 et Z/D est au plus égal à 0.4, permet de garantir un effort de décoincement minimal et ce à condition que le matériau situé entre ces deux points soit suffisamment rigide, ce qui est assuré par l'élément circonférentiel de renforcement additionnel.

Une autre solution pour augmenter la rigidité de compression de cette dite portion de bourrage est de s'opposer à la déformation transversale induite, importante dans le cas des matériaux caoutchouteux. La solution proposée par l'invention est d'entourer l'ensemble de cette portion de bourrage par au moins une couche de renforts textiles, parallèles entre eux, et limitant ces déformations. Cette couche de renforts textiles est nommée couche de talon et l'ensemble de ces couches, armature de talon.

Pour limiter au mieux les déformations transversales induites, il convient que la couche de talon soit la plus extérieure possible au bourrelet sans toutefois être en contact avec la jante où ont lieu des phénomènes de frottement capables de d'endommager les renforts et de les rendre impropres à la fonction visée.

Des gommes spécialement conçues pour résister au frottement sur une épaisseur jusqu'à Z/2, la moitié de la distance radiale entre le point le plus radialement intérieur du bourrelet et le point le plus radialement intérieur de l'élément circonférentiel de renforcement principal, pourront être utilisées pour protéger la couche de talon de ce phénomène d'usure. L'épaisseur de ces gommes de protection contre l'usure est à minimiser car elles sont plus compressibles que le mélange de bourrage du talon et cela diminue d'autant l'efficacité de l'invention. Selon l'invention, pour ledit bourrelet qui comprend une face externe, les points de l'armature de talon, positionnés radialement à l'intérieur du point le plus radialement intérieur de l'élément circonférentiel de renforcement principal, sont, par rapport à la face externe du bourrelet, à une distance maximale au plus égale à Z/2, la moitié de la distance radiale Z entre le point le plus radialement intérieur du bourrelet et le point le plus radialement intérieur de l'élément circonférentiel de renforcement principal, afin de s'opposer efficacement aux efforts de décoincement. Par face externe du bourrelet, on entend la surface du pneumatique en contact avec l'extérieur du pneumatique et appartenant au bourrelet.

Le lien entre le bourrelet et le flanc s'effectue à l'aide d'une zone dite de recouvrement de la couche de talon et de la couche de carcasse et donc telle que l'extrémité de la couche de talon la plus axialement extérieure est radialement extérieure à l'extrémité de la couche de carcasse la plus radialement intérieure.

Lors du décoincement, pour augmenter l'effort de contact du bourrelet sur la jante qui s'oppose au déplacement de la pointe de gomme afin d'éviter que celle-ci fasse office de pivot, il est essentiel de disposer dans le bourrelet d'au moins un élément circonférentiel de renforcement additionnel. Pour que son efficacité soit maximale, il convient que cet élément circonférentiel de renforcement additionnel soit positionné au plus près de la pointe de gomme et radialement extérieur à l'armature de talon. Un élément circonférentiel de renforcement additionnel augmente la rigidité radiale locale du talon.

L'invention découple deux des rôles de l'élément de renforcement circonférentiel :
- la reprise de l'effort de pression en mode usuel, à savoir à une pression proche de la pression nominale telle que recommandée, par exemple, par la Tire and Rim Association ou TRA., qui nécessite une forte rigidité et une forte résistance. Ce rôle du maintien du pneumatique sous pression sur la jante est assuré par l'élément circonférentiel de renforcement principal.
- la reprise de l'effort de déplacement de la pointe de gomme par les efforts transversaux en usage basse pression. Ce rôle nécessite un élément circonférentiel de renforcement additionnel d'un diamètre proche du diamètre de la jante. En revanche ce rôle ne peut être rempli par un élément circonférentiel de renforcement métallique d'une rigidité élevée car l'utilisation d'un tel élément rendrait le pneumatique difficile à monter.

Le découplage des deux fonctions permet, pour assurer cette deuxième fonction, l'utilisation de matériaux moins rigides pour l'élément circonférentiel de renforcement additionnel. A titre indicatif, l'élément circonférentiel de renforcement additionnel a une rigidité radiale au plus égale à 0,75 fois la rigidité radiale de l'élément circonférentiel de renforcement principal. Cette plus faible rigidité permet donc le positionnement d'un élément circonférentiel de renforcement additionnel à un diamètre plus faible que celui de l'élément circonférentiel de renforcement métallique principal, capable de prévenir le décoincement en cas d'un usage à basse pression, tout en maintenant la facilité de montage du pneumatique.

L'élément circonférentiel de renforcement principal peut être réalisé soit à l'aide d'éléments de renforcement métalliques ou textiles concentriques enroulés en spirale ou tressés entre eux.

Dans un mode de réalisation préféré, le point le plus radialement intérieur de l'élément circonférentiel de renforcement principal est à une distance axiale Y du point le plus radialement intérieur du bourrelet telle que le rapport (Y/D) de cette dite distance axiale (Y) à la largeur axiale du bourrelet au seat (D) est au plus égal à 0,75. En effet, il est nécessaire de ne pas mettre l'élément circonférentiel de renforcement principal en contact avec la couche de talon afin de ne pas provoquer une usure de leurs constituants par frottement, ni de provoquer une fissuration de la composition caoutchouteuse du bourrage par cisaillement en raison d'une épaisseur trop peu importante de ce matériau entre les deux éléments de renforcement que sont la couche de talon et l'élément circonférentiel de renforcement principal.

Pour ces mêmes raisons, afin d'écarter les risques d'usure des éléments de renforcement ou de fissuration du bourrage au niveau du seat, Il est particulièrement avantageux que le point le plus radialement intérieur de l'élément circonférentiel de renforcement principal soit à une distance radiale (Z) du point le plus radialement intérieur du bourrelet telle que le rapport (Z/D) de cette dite distance radiale (Z) à la largeur axiale du bourrelet au seat (D) soit au moins égal à 0,25.

La liaison entre le bourrelet et le flanc se fait par le cisaillement des matériaux, généralement caoutchouteux, situés entre les éléments de renforcement de la couche de talon et de la couche de carcasse, dits gommes de cisaillement. L'épaisseur de ces dites gommes de cisaillement et la longueur du recouvrement déterminent l'équilibre entre la rigidité latérale et l'endurance du pneumatique. Il est donc avantageux pour un pneumatique fonctionnant à basse pression, que l'extrémité (231) la plus axialement extérieure de la couche de talon soit radialement extérieure à l'extrémité (311) la plus radialement intérieure de la couche de carcasse (31) et d'une différence de rayon au moins égale à 10 mm, de préférence au moins égale à 20 mm.

Il est particulièrement avantageux que l'extrémité de la couche de carcasse la plus radialement intérieure soit radialement extérieure au point le plus radialement extérieur de l'élément circonférentiel de renforcement principal.

Pour garantir la géométrie et notamment la position de l'armature de talon vis-à-vis de la face externe du bourrelet pour la partie radialement intérieure au point le plus radialement intérieur de l'élément circonférentiel de renforcement principal, il est nécessaire de supprimer les mouvements de gomme de bourrage dus aux efforts s'appliquant sur l'armature de carcasse au cours du moulage du pneumatique en fabrication. La solution proposée est de supprimer la présence de l'armature de carcasse dans le bourrelet et de solidariser le bourrelet et le flanc via une zone dite de recouvrement entre l'armature de carcasse et l'armature de talon et de préférence radialement extérieurement au point le plus radialement extérieur de l'élément circonférentiel de renforcement principal.

Pour ce faire, l'extrémité de l'armature de carcasse la plus radialement intérieure se situe radialement à l'extérieur du rayon supérieur de l'élément circonférentiel de renforcement principal. De plus pour que l'armature de carcasse assure sa fonction de lien avec le sommet; son extrémité se situe radialement à l'intérieur du point de plus large section axiale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA.

Selon l'invention, la couche de carcasse où a lieu le recouvrement peut être soit axialement intérieure soit extérieure à la couche de talon participant au recouvrement. Donc une des réalisations possible de l'invention est telle que l'extrémité de la couche de talon la plus axialement extérieure est axialement extérieure à l'extrémité de la couche de carcasse la plus radialement intérieure. Une autre réalisation est telle que l'extrémité de la couche de talon la plus axialement extérieure est axialement intérieure à l'extrémité de la couche de carcasse la plus radialement intérieure.

Selon le nombre de couches de carcasse dans l'armature de carcasse et de couches de talon dans l'armature de talon, il est possible soit de se limiter à une unique longueur de recouvrement entre deux couches de chacune des armatures, soit de multiplier les longueurs de recouvrement en alternant une couche de carcasse et une couche de talon ou une couche de talon, deux couches de carcasse, une couche de talon. Il est possible de faire remonter la couche de talon jusque sous le sommet. Cette solution permet d'augmenter la rigidité des flancs du pneumatique pour répondre à des critères de dynamique du véhicule. Mais pour cela, la ou les couches de carcasse devront impérativement reprendre la totalité des tensions dans le sens radial liées au gonflage du pneumatique. L'homme de l'art dispose pour ce faire de solutions bien connues, comme par exemple la géométrie et le module des renforts constituant la couche de carcasse, en regard de celles constituant la couche de talon.

Avantageusement les éléments de renforcement d'une couche de talon sont en textile, de préférence en polyamide aliphatique, en polyamide aromatique ou en une combinaison de polyamide aliphatique et de polyamide aromatique, en polytéréphtalate d'éthylène, ou en rayonne car ils s'adaptent facilement aux différentes géométries du bourrelet.

Il est encore avantageux que les éléments de renforcement d'une couche de carcasse soient en métal ou en textile, de préférence en polyamide aliphatique, en polyamide aromatique ou en une combinaison de polyamides aliphatiques et de polyamide aromatique, en polytéréphtalate d'éthylène, ou en rayonne, selon la pression d'usage du pneumatique. Pour des pneumatiques dont la pression d'usage est inférieure à 1,5 bar, les armatures de carcasse avec des éléments de renforcement en textile sont souvent préférées pour leur faible masse et leur facilité de mise en oeuvre. Pour des pneumatiques dont la pression d'usage est supérieure à 1,5 mais dont un des modes étendus prévoit un usage avec une pression inférieure à 1,5 bar, les armatures de carcasse avec des éléments de renforcement en métal sont souvent préférées pour leur résistance à la compression et à la fatigue.

Selon un mode de réalisation particulier, les éléments de renforcement de la couche de carcasse sont parallèles entre eux et font avec la direction circonférentielle, un angle compris entre 65° et 115°, pour une performance en résistance au roulement et en confort bien connue.

Deux éléments de renforcement sont dits « parallèles » dans ce document lorsque l'angle formé entre les deux éléments est inférieur ou égal à 5°.

Selon un mode de réalisation préférentiel, une couche de talon comprend des éléments de renforcement parallèles entre eux et faisant avec la direction circonférentielle, un angle compris entre 20° et 160°, permettant un compromis intéressant entre la rigidité circonférentielle du bourrelet pour limiter l'usure au contact de la jante de montage et la rigidité en flexion pour limiter les déformations autour du crochet de jante, source d'une dissipation énergétique importante compte tenu de l'important volume de gomme présent dans le bourrelet. Par ailleurs, le choix de l'angle de la couche de talon dépend des rigidités que souhaite obtenir le concepteur du pneumatique notamment pour répondre à des critères de dynamique du véhicule. La position radiale des extrémités des couches de talon est également un paramètre intéressant de réglage des rigidités structurelles du pneumatique.

Il est particulièrement avantageux que le au moins un élément circonférentiel de renforcement additionnel comprenne au moins un matériau textile, de préférence un polyamide aliphatique, un polyamide aromatique, un polyester ou une rayonne. Les éléments circonférentiels de renforcement textiles sont préférés dans cette fonction en raison de leur rigidité intermédiaire entre le métal et les matériaux caoutchouteux.

En effet les renforts textiles ont des rigidités, estimées par leurs modules à 10% d'élongation selon la norme ASTM D 885 de janvier 2010 compris entre 1GPa et 130 GPa. Ces rigidités sont d'un ordre au moins 10 fois supérieur à celles des mélanges caoutchouteux tels qu'utilisés habituellement dans les pneumatiques, rigidités estimées par leurs modules sécants dits "nominaux" à 10% d'allongement selon la norme NF ISO 37 de décembre 2005, compris entre 1 MPa et 130 MPa. L'intérêt d'un élément circonférentiel de renforcement additionnel textile réside dans sa rigidité plus faible par rapport au métal généralement utilisé dans les pneumatiques, rigidité estimée par le module d'élasticité du matériau mesuré lors d'un test de traction selon la norme EN ISO 6892-1, et généralement compris entre 150 et 230 GPa. Les rigidités des éléments circonférentiels de renforcement additionnel textiles permettent un montage facile et sont suffisantes pour assurer un maintien du pneumatique sur la jante en cas de baisse de pression étant donné la localisation de l'application des efforts transversaux dans la situation de décoincement.

L'objet du au moins un élément circonférentiel de renforcement additionnel est de rigidifier radialement la portion du bourrelet le comprenant. Il convient donc qu'il soit plus rigide que le matériau caoutchouteux du bourrelet. Les matériaux précédemment cités répondent aux critères techniques énoncés précédemment et sont plus rigides que les matériaux caoutchouteux habituellement utilisés dans les pneumatiques. De même ils sont également moins rigides que le métal tel l'acier habituellement utilisé pour l'élément circonférentiel de renforcement principal afin de permettre un montage facile du pneumatique sur la jante. Par ailleurs leur déformation à rupture permet le montage du pneumatique sans dommage.

Les renforts de type polyamide aliphatique (nylon) ou polytéréphtalate d'éthylène (PET) sont résistants aux agressions potentielles lors du montage et démontage du pneumatique et à la fatigue. Ils ont de plus une plage de déformation élastique très étendue qui permet un réglage facile des paramètres de conception, de fabrication, et d'utilisation. Ils sont par ailleurs peu coûteux. Un renfort de type polyamide aromatique (aramide) présente l'avantage de générer la rigidité circonférentielle et radiale nécessaire avec une quantité réduite de câbles. Cette propriété est intéressante pour des architectures de pneumatiques où la zone possible de la pose de l'élément circonférentiel de renforcement additionnel serait de faible volume. Des renforts hybrides contenant des polyamides aliphatiques et polyamides aromatiques sont un compromis intéressant pour les nombreuses possibilités de conception qu'ils offrent.

Les matériaux textiles ayant une propriété de contraction thermique, sont d'autant plus intéressants qu' ils génèrent un effort de serrage sur la jante supplémentaire du fait de la diminution de diamètre qu'ils subissent consécutivement à la cuisson du pneumatique, effort qui s'opposera aux efforts de décoincement sans impacter la facilité de montage du pneumatique. Le diamètre de pose à la fabrication de l'élément circonférentiel de renforcement additionnel sera calculé en fonction de ses propriétés thermosensibles.

Par élément circonférentiel de renforcement additionnel textile, on entend tout élément constitué par des fils textiles, unitaires ou posés par paquets ou bandelettes, discontinus ou continus suivant sensiblement une direction circonférentielle dont le résultat technique est d'augmenter les rigidités circonférentielles et radiales de la portion du bourrelet axialement intérieure au point le plus axialement intérieur de l'élément circonférentiel de renforcement principal, radialement extérieure à une partie la plus radialement intérieure de l'armature de talon et radialement intérieure au point le plus radialement extérieur de l'élément circonférentiel de renforcement principal.

De façon alternative, il serait aussi possible d'utiliser des fils métalliques élastiques, ondulés, ou discontinus pour assurer la fonction de l'élément circonférentiel de renforcement additionnel. A noter qu'un risque de fissuration du bourrelet autour des extrémités des fils métalliques existe pour une solution utilisant des fils métalliques discontinus.

En ce qui concerne les renforts métalliques, un renfort métallique est caractérisé mécaniquement par une courbe représentant la force de traction (en N), appliquée au renfort métallique, en fonction de l'allongement relatif (en %) du renfort métallique, dite courbe force-allongement. De cette courbe force-allongement sont déduites des caractéristiques mécaniques en traction, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement (loi de Hooke). L'allongement plastique Ap résulte de la plasticité (déformation irréversible au-delà de la limite d'élasticité) du métal de ces fils métalliques pris individuellement. Ces différents allongements ainsi que leurs significations respectives, bien connus de l'homme du métier, sont décrits, par exemple, dans les documents US 5843583, WO 2005014925 et WO2007090603.

On définit également, en tout point de la courbe force-allongement, un module en extension (en GPa) qui représente la pente de la droite tangente à la courbe force-allongement en ce point. En particulier, on appelle module élastique en extension ou module d'Young, le module en extension de la partie linéaire élastique de la courbe force-allongement.

Un renfort métallique élastique est caractérisé par un allongement structural As au moins égal à 1% et un allongement total à rupture At au moins égal à 4%. En outre, un renfort métallique élastique a un module élastique en extension compris usuellement entre 40 GPa et 150 GPa.

Un renfort métallique non élastique ou inélastique est caractérisé par un allongement relatif, sous une force de traction égale 10% de la force à rupture Fm, au plus égal à 0.2%. Par ailleurs, un renfort métallique non élastique généralement a un module élastique en extension compris usuellement entre 150 GPa et 230 GPa.

Par fils métalliques ondulés, on entend des fils métalliques préformés plastiquement et présentant une ondulation radiale ou circonférentielle, ou mixte autour de leurs positions moyennes. Cette ondulation donne au fil un comportement élastique à l'élément circonférentiel de renforcement additionnel ainsi constitué dans le pneumatique.

Il est particulièrement avantageux que la portion de bourrage du bourrelet, au moins radialement intérieure au point le plus radialement intérieur de l'élément circonférentiel de renforcement principal, ait un module d'élasticité à 10% d'allongement au moins égal à 15 MPa. En effet la rigidité du matériau de bourrage intervient également dans la rigidité de la zone et dans le phénomène du décoincement.

Préférentiellement, la portion de bourrage radialement extérieure au point le plus radialement extérieur de l'élément circonférentiel de renforcement principal, a un module d'élasticité à 10% d'allongement inférieur à 0.5 fois le module d'élasticité à 10% d'allongement de la portion de bourrage au moins radialement intérieure au point le plus radialement intérieur de l'élément circonférentiel de renforcement principal afin de favoriser la flexion sur le flanc par rapport au bourrelet et de limiter ainsi la dissipation d'énergie.

Pour ce même objectif de limitation de la dissipation d'énergie au roulage et pour faciliter la fabrication, il peut être préféré que la portion de bourrage, axialement extérieure au point le plus radialement extérieur de l'élément circonférentiel de renforcement principal, ait un module d'élasticité à 10% d'allongement inférieur à 0.5 fois le module d'élasticité à 10% d'allongement de la portion de bourrage au moins radialement intérieure au point le plus radialement intérieur de l'élément circonférentiel de renforcement principal.

L'ensemble monté, comprenant au moins une roue et un pneumatique, selon invention fonctionne d'autant mieux s'il comprend une roue possédant au moins un hump dont la hauteur est supérieure ou égale à 1 mm. Le hump permet le blocage du déplacement axial de la pointe de gomme du bourrelet en cas d'effort latéral et empêche tout glissement du point de contact entre la pointe de gomme et la jante obligeant ainsi le bourrelet à se déplacer autour de celui-ci. Le hump est un terme connu de l'homme du métier désignant une « bosse » sur la portée du talon de jante d'une roue. Les jantes pour pneumatiques de voitures de tourisme sont très fréquemment munies d'un hump.

### BREVE DESCRIPTION DES DESSINS

Les caractéristiques et autres avantages de l'invention seront mieux compris à l'aide des figures 1 à 12, les dites figures n'étant pas représentées à l'échelle mais de façon simplifiée, afin de faciliter la compréhension de l'invention :
- La figure 1 représente un pneumatique selon l'art antérieur.
- La figure 2 illustre les termes 'bord intérieur' et 'bord extérieur' d'une bande de roulement.
- Les figures 3 à 8 représentent le déplacement du flanc d'un pneumatique en fonction de l'effort appliqué au flanc du pneumatique lors d'un essai de décoincement.
- La figure 9 représente la coupe méridienne du bourrelet et du flanc selon l'invention. La figure 9 illustre notamment les distances Y et Z et la largeur axiale du bourrelet au seat D.
- Les figures 10 et 11 représentent la coupe méridienne du bourrelet et du flanc selon l'invention et des répartitions préférées de gommes de bourrage différentes.
- La figure 12 représente les déplacements du flanc d'un pneumatique en fonction de l'effort appliqué au flanc lors d'un essai de décoincement.

### DESCRIPTION DETAILLEE DES DESSINS

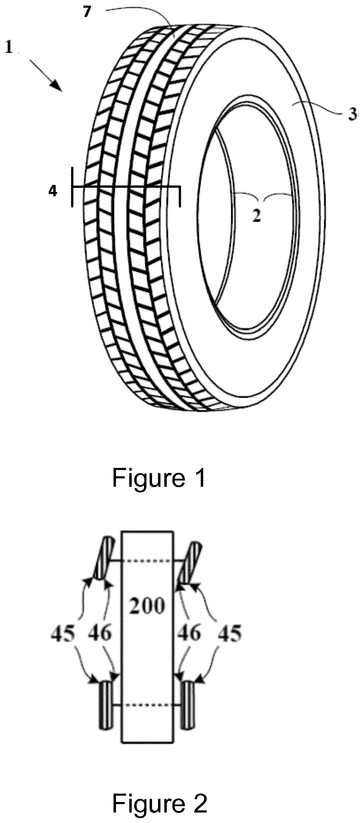

La figure 1 représente schématiquement un pneumatique 1 selon l'art antérieur. Le pneumatique 1 comporte un sommet 4 comprenant une armature de sommet (invisible sur la figure) surmontée d'une bande de roulement 7, deux flancs 3 prolongeant le sommet radialement vers l'intérieur, ainsi que deux bourrelets 2 radialement intérieurs aux flancs 3.

La figure 2 représente schématiquement des pneumatiques destinés à être montés sur des jantes de montage de roues d'un véhicule 200 et ayant un sens de montage prédéterminé sur le véhicule. Il comporte un bord axial extérieur 45 et un bord axial intérieur 46, le bord axial intérieur 46 étant le bord destiné à être monté du côté de la caisse du véhicule lorsque le pneumatique est monté sur le véhicule selon ledit sens de montage prédéterminé et inversement pour le bord axial extérieur 45. Dans le document « côté extérieur du véhicule » désigne le bord axial extérieur 45.

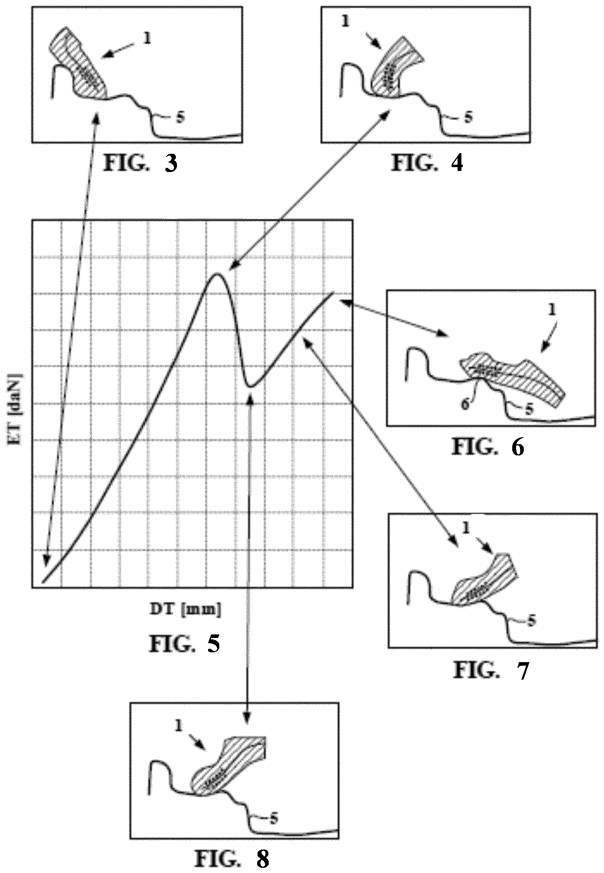

Le graphe représenté à la figure 5 montre le résultat d'une simulation numérique d'un essai de décoincement selon la norme chinoise GB/T 4502-2009. Une forme conique est appliquée contre le flanc du pneumatique. Cette forme conique avance à une vitesse déterminée. L'effort ET, requis pour faire avancer la forme conique à cette vitesse, est tracé en fonction du déplacement DT de la forme conique.

La situation initiale du pneumatique 1 (dont seuls le bourrelet et une partie du flanc sont représentés) sur sa jante de montage 5 est représentée à la figure 3.

Lorsque la forme conique se déplace, la résistance du pneumatique se manifeste dans l'augmentation quasiment linéaire de l'effort ET. Le bourrelet commence à se déplacer jusqu'au point où il commence à basculer. C'est la situation représentée à la figure 4. Ce basculement fait chuter l'effort nécessaire pour faire avancer la forme conique, jusqu'à ce que le bourrelet ait complètement basculé, comme cela est représenté à la figure 8. Ensuite, l'effort augmente de nouveau, car il s'agit de faire monter le bourrelet sur le « hump » 6 de la jante de montage 5, comme cela est montré à la figure 7. C'est seulement lorsque le bourrelet a surmonté le « hump » 6 (situation représentée à la figure 6) que le décoincement est achevé.

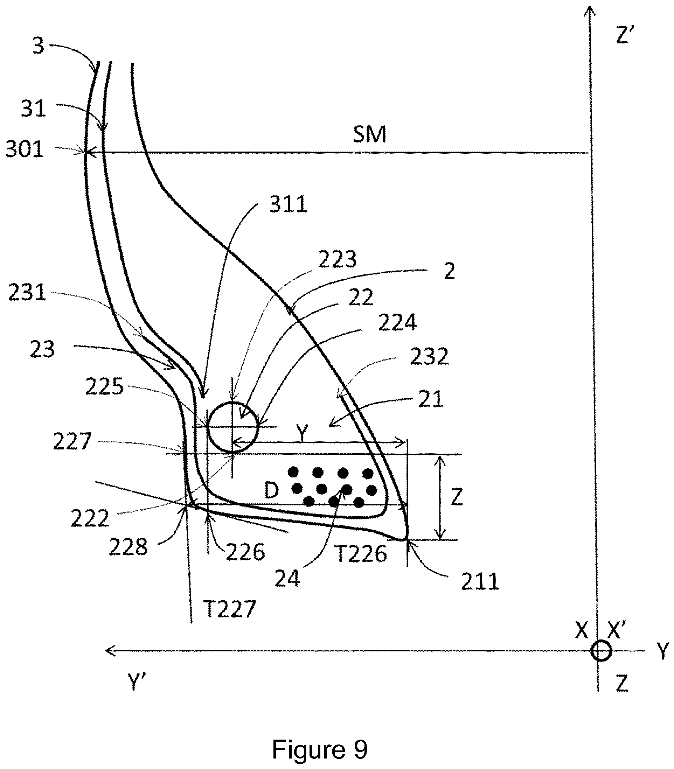

La figure 9 représente schématiquement, la coupe méridienne, d'un bourrelet 2 et d'une partie du flanc 3 selon l'invention. Le pneumatique 1 comporte deux bourrelets 2 destinés à entrer en contact avec une jante de montage (non représentée). Au moins le bourrelet 2 et le flanc 3 positionnés côté extérieur du véhicule (cf. figure 2) comportent :
- Un élément circonférentiel de renforcement principal 22 dont le point le plus radialement intérieur 222 est placé à une distance radiale Z du point 211 le plus radialement intérieur du pneumatique et à une distance axiale Y de ce même point.
- Une armature de carcasse comportant au moins une couche de carcasse 31 dont l'extrémité 311 se situe pour cette version de l'invention radialement à l'extérieur du point 223 le plus radialement extérieur de l'élément circonférentiel de renforcement principal 22 et radialement à l'intérieur du point 301 de plus grande largeur du pneumatique. L'extrémité 311 de la couche de carcasse est également axialement à l'extérieur du point 224 le plus axialement intérieur de l'élément circonférentiel de renforcement principal 22.
- Une armature de talon comportant au moins une couche de talon 23 dont l'extrémité la plus axialement extérieure 231 est radialement extérieure à l'extrémité 311 de la couche de carcasse 31 et dont l'extrémité la plus axialement intérieure 232 est radialement extérieure au point 222, le plus radialement intérieur de l'élément circonférentiel de renforcement principal 22.
- un élément circonférentiel de renforcement additionnel 24 constitué de plusieurs fils enroulés circonférentiellement, dont au moins un fil est axialement intérieur au point le plus axialement intérieur 224 de l'élément circonférentiel de renforcement principal 22, radialement extérieur à une partie la plus radialement intérieure de l'armature de talon et radialement intérieur au point 223 le plus radialement extérieur de l'élément circonférentiel de renforcement principal 22.
- Le point 225 le plus axialement extérieur de l'élément circonférentiel de renforcement principal 22 et sa projection 226 radiale intérieure sur la face externe du pneumatique et la tangente T226 à la face externe du pneumatique en ce point 226 ou seat du bourrelet.
- Le point 222 le plus radialement intérieur de l'élément circonférentiel de renforcement principal 22 et sa projection 227 axiale extérieure sur la face externe du pneumatique et la tangente T227 à la face externe du pneumatique en ce point 227, ou side du bourrelet.
- L'intersection de ces 2 tangentes T226 et T227 au point 228, point de raccordement entre le seat et le side du bourrelet.
- La largeur axiale du bourrelet au seat D, égale à la distance axiale entre le point le plus radialement intérieur 211 et le point 228 de raccordement entre le seat et le side du bourrelet.

Le bourrelet 2 représenté à la figure 9 comporte en outre une portion destinée à entrer en contact avec la jante de montage (non représentée).

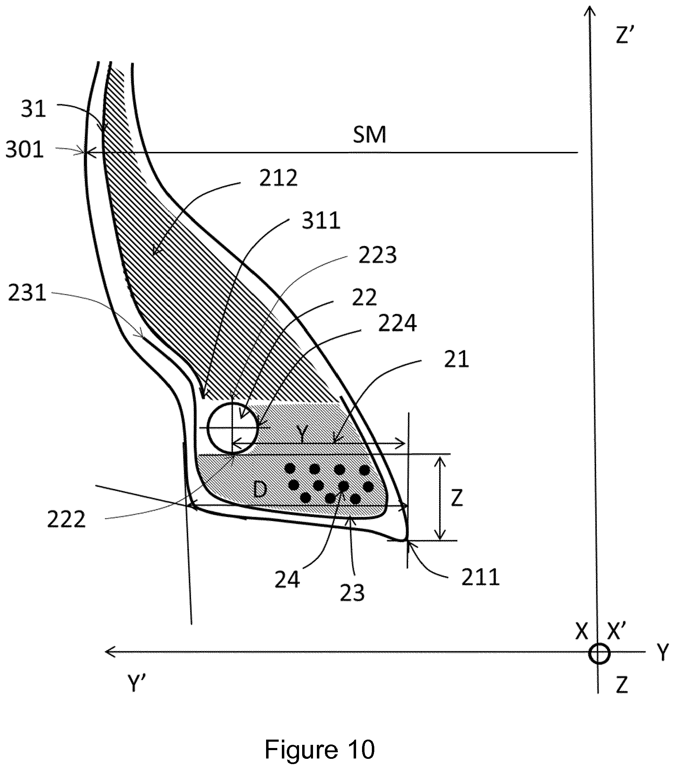

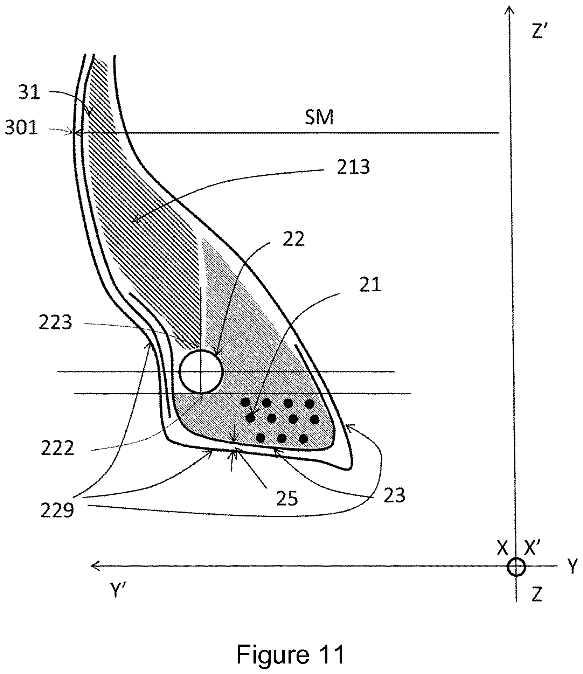

Les figures 10 et 11 illustrent les différentes configurations préférées des portions de bourrages. Sur les figures 10 et 11, la portion de bourrage 21 est au moins radialement intérieure au point 222 le plus radialement intérieur de l'élément circonférentiel de renforcement principal 22. Sur la figure 10, la portion de bourrage 212 est radialement extérieure au point 223 le plus radialement extérieur de l'élément circonférentiel de renforcement principal. Sur la figure 11, la portion de bourrage 213 est axialement extérieure au point 223 le plus radialement extérieur de l'élément circonférentiel de renforcement principal 22. La figure 11 illustre également la possibilité de la couche de talon 23 d'être axialement extérieure à la couche de carcasse 31 au niveau de la zone de recouvrement et à l'extrémité 311 de la couche de carcasse d'être radialement intérieure au point le plus radialement intérieur 222 de l'élément circonférentiel de renforcement principal 22. La figure 11 montre également quelques points 229 appartenant à la face externe du bourrelet. Cette figure montre également un exemple d'un point 26 de l'armature de talon, positionnés radialement à l'intérieur du point 222 le plus radialement intérieur de l'élément circonférentiel de renforcement principal 22, positionné, par rapport à la face externe du bourrelet, à une distance 25 maximale au plus égale à Z/2, la moitié de la distance radiale Z entre le point le plus radialement intérieur du bourrelet 211 et le point le plus radialement intérieur de l'élément circonférentiel de renforcement principal 222.

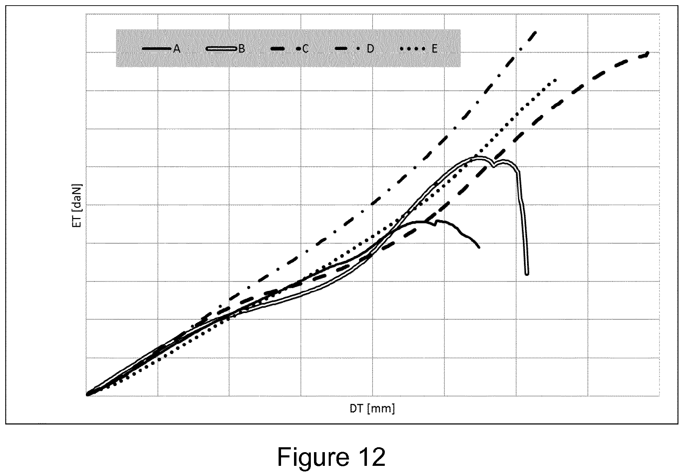

La figure 12 représente l'effort ET exprimé en daN requis pour faire avancer la forme conique du test de décoincement selon la norme chinoise GB/T 4502-2009 en fonction du déplacement DT de la forme conique, exprimé en mm. Sont représentés les résultats de test :
- D'un pneumatique A, selon l'art antérieur, gonflé à une pression de 0.7 bar, représenté par une ligne continue.
- D'un pneumatique B, selon l'invention mais sans élément circonférentiel de renforcement additionnel, gonflé à une pression de 0.7 bar, représenté par une double ligne continue.
- D'un pneumatique C, selon l'invention, comprenant des éléments circonférentiels de renforcement additionnels en polytéréphtalate d'éthylène (PET), gonflé à une pression de 0.7 bar, représenté par une ligne discontinue.
- D'un pneumatique D, selon l'invention, comprenant des éléments circonférentiels de renforcement additionnels hybrides de polyamide aromatique (aramide) et de polyamide aliphatique (nylon), gonflé à une pression de 0.7 bar, représenté par une ligne mixte alternant un tiret et un point.
- D'un pneumatique E, selon l'invention, comprenant des éléments circonférentiels de renforcement additionnels hybrides de polyamide aromatique (aramide) et de polyamide aliphatique (nylon), gonflé à une pression de 0 bar, représenté par une ligne pointillée.
Le gain amené par un mode de réalisation de l'invention pour provoquer un décoincement, se mesure en effort entre le maxima sur l'axe des ordonnées de la courbe correspondant au pneumatique selon l'état de l'art et le maxima de la courbe correspondant au un mode de réalisation de l'invention considéré. Le gain amené se mesure en déplacement, entre les abscisses de ces deux maxima.

Les inventeurs ont réalisé l'invention pour un pneumatique de dimension 335/30_ZR_18, ayant une armature de carcasse constituée de deux couches de carcasse de polyester faisant un angle de +/-85° avec la direction circonférentielle, une couche de talon en aramide faisant un angle de 55° avec la direction circonférentielle, un élément circonférentiel de renforcement principal 22 constitué de câbles métalliques tressés de section 17 mm2, le module d'élasticité à 10% d'allongement du bourrage 21 est égal à 54 MPa et celui du bourrage 213 à 23 MPa. Le positionnement de l'élément circonférentiel de renforcement principal est tel que Y = 10 mm, Z= 6.7 mm, D=17.7 mm, Y/D = 0.56, Z/D = 0.38. La longueur de recouvrement entre la couche de carcasse et la couche de talon varie de 20 à 25 mm ; la position radiale de l'extrémité 311 de la couche de carcasse la plus radialement intérieure est égale à la position radiale du point 223 le plus radialement extérieur de l'élément circonférentiel de renforcement principal 22 ; l'épaisseur moyenne de la gomme de protection du renfort talon est de 1.5 mm. Les inventeurs ont réalisé deux variantes de l'invention en utilisant cette géométrie à laquelle ils ont ajouté un élément circonférentiel de renforcement additionnel constitué par :
- soit 40 tours d'un renfort de deux torons de polytéréphtalate d'éthylène de titre 140 dTex, posé tel que le diamètre du tour du renfort le plus radialement intérieur du pneumatique monté sur jante soit au moins 4% supérieur à son diamètre de pose lors de la fabrication et ce afin de créer un effort de serrage supplémentaire du pneumatique sur la jante,
- soit 40 tours d'un renfort hybride de deux torons de polyamide aromatique (aramide) de titre 167 dTex et d'un toron de polyamide aliphatique (nylon), de titre 140 dTex, posé tel que le diamètre du tour du renfort le plus radialement intérieur du pneumatique monté sur jante soit au moins 2% supérieur à son diamètre de pose lors de la fabrication et ce afin de créer un effort de serrage supplémentaire du pneumatique sur la jante.

Ces solutions sont comparées à un pneumatique selon l'état de l'art, de dimension 335/30_ZR_18, ayant une armature de carcasse constituée de deux couches de carcasse de polyester faisant un angle de +/-85° avec la direction circonférentielle, un élément circonférentiel de renforcement de câbles métalliques tressés de section 17mm2, un bourrage tringle dont le module d'élasticité est égal à 23MPa, et une pointe de gomme dont le module d'élasticité à 10% d'allongement est égal à 23 MPa ; Le positionnement de l'élément circonférentiel de renforcement principal est tel que Y=7mm, Z = 8mm, D = 16mm, Y/D = 0.43, Z/D = 0.5.

Pour mesurer l'impact de la présence de l'élément circonférentiel de renforcement additionnel, les inventeurs ont réalisé un pneumatique selon l'invention mais sans élément circonférentiel de renforcement additionnel. Dans cette fabrication, le positionnement de l'élément circonférentiel de renforcement principal est tel que Y=7.8 mm, Z = 4.5 mm, D = 14.6 mm, Y/D = 0.53, Z/D = 0.31.

La méthode de test est similaire à celle préconisée dans la norme chinoise GB/T 4502-2009. Le test est effectué à une pression de 0.7 bar. La roue utilisée est une roue du standard ETRTO dont le hump mesure 1.5 mm de hauteur.

Le pneumatique, représenté par la courbe B de la figure 12, selon l'invention mais sans la présence d'un élément circonférentiel de renforcement additionnel, permet un gain de 18% sur le déplacement et de 19% sur l'effort de décoincement nécessaire pour un pneumatique suivant l'état de la technique, représenté par la courbe A de la figure 12, quand la pression nécessaire au franchissement du hump de la jante lors du montage est abaissée de 50% montrant ainsi une facilité de montage non seulement conservée mais en plus améliorée.

Les deux réalisations de pneumatique selon l'invention, représentées par les courbes C et D de la figure 12, ne décoincent pas aux limites de la machine utilisée, ce qui représente un gain d'au moins 50% sur le déplacement et de 100% sur l'effort comparativement à un pneumatique de l'état de la technique (courbe A figure 12), quand la pression nécessaire au franchissement du hump de la jante lors du montage est abaissée de 30 à 20% montrant ainsi que la facilité de montage est non seulement conservée mais en plus améliorée.

Le pneumatique selon l'invention, comprenant un élément circonférentiel de renforcement additionnel, constitué par 40 fils hybrides contenant un polyamide aromatique (aramide) et un polyamide aliphatique (nylon), a été également testé à une pression de 0 bar, (courbe E représentée par une ligne pointillée en figure 12). Le test est allé en limite de déplacement de la machine sans que le pneumatique décoince de la roue. Ce dernier test démontre des gains en décoincement de l'invention non seulement à basse pression mais également pour un pneumatique à pression nulle.

## Revendications

1. Pneumatique (1) destiné à être monté sur une jante de montage, comprenant :
deux bourrelets (2), destinés à entrer en contact avec la jante de montage,
chaque bourrelet (2), ayant un point (211) le plus radialement intérieur, une largeur axiale au seat D, et une face externe constituée par la surface du pneumatique en contact avec l'extérieur du pneumatique et appartenant au bourrelet, et chaque bourrelet comportant au moins un bourrage (21) constitué par au moins une composition caoutchouteuse et au moins un élément circonférentiel de renforcement (22) dit principal,
la section méridienne de l'élément circonférentiel de renforcement principal (22) ayant un point (222) le plus radialement intérieur, un point (223) le plus radialement extérieur et un point (224) le plus axialement intérieur, le point (222) le plus radialement intérieur étant positionné à une distance radiale Z et à une distance axiale Y du point (211) le plus radialement intérieur du bourrelet,
la largeur axiale au seat D étant mesurée entre le point le plus radialement intérieur du bourrelet (211) et le point d'intersection (228) entre une première droite (T227) tangente à la projection axiale extérieure (227) du point le plus radialement intérieur (222) de l'élément circonférentiel de renforcement principal (22) et une deuxième droite (T226) tangente à la projection radiale intérieure (226) du point le plus axialement extérieur (225) de l'élément circonférentiel de renforcement principal (22),
une armature de carcasse reliant les deux bourrelets (2) et comprenant au moins une couche de carcasse (31) s'étendant dans chaque bourrelet (2), radialement vers l'intérieur, jusqu'à une extrémité de couche de carcasse (311),
pour au moins un bourrelet (2), l'extrémité de couche de carcasse (311) est radialement à l'intérieur du point (301) de plus grande largeur axiale (SM) du pneumatique et axialement à l'extérieur du point (224) le plus axialement intérieur de l'élément circonférentiel de renforcement principal (22),
pour ledit bourrelet (2), le rapport Y/D entre la distance axiale Y du point (222) le plus radialement intérieur de l'élément circonférentiel de renforcement principal (22) au point (211) le plus radialement intérieur du bourrelet (2), et la largeur axiale du bourrelet au seat D, est au moins égal à 0.5,
ledit bourrelet (2) comprend une armature de talon, constituée d'au moins une couche de talon (23), entourant le bourrage (21), de telle sorte que l'extrémité (231) la plus axialement extérieure de la couche de talon (23) est radialement extérieure à l'extrémité (311) la plus radialement intérieure de la couche de carcasse (31), et de telle sorte que l'extrémité (232) la plus axialement intérieure de la couche de talon (23) est au moins radialement extérieure au point (222) le plus radialement intérieur de l'élément circonférentiel de renforcement principal (22),
pour ledit bourrelet (2), les points de l'armature de talon, positionnés radialement à l'intérieur du point (222) le plus radialement intérieur de l'élément circonférentiel de renforcement principal (22), sont positionnés, par rapport à la face externe du bourrelet, à une distance maximale au plus égale à Z/2, la moitié de la distance radiale Z entre le point le plus radialement intérieur du bourrelet (211) et le point le plus radialement intérieur de l'élément circonférentiel de renforcement principal (222),
ledit bourrelet (2) comprend au moins un élément circonférentiel de renforcement additionnel (24), axialement intérieur au point le plus axialement intérieur (224) de l'élément circonférentiel de renforcement principal (22), radialement extérieur à une partie la plus radialement intérieure de l'armature de talon (23) et radialement intérieur au point le plus radialement extérieur (223) de l'élément circonférentiel de renforcement principal (22).
**caractérisé en ce que,** pour ledit bourrelet (2), le rapport Z/D entre la distance radiale Z du point (222) le plus radialement intérieur de l'élément circonférentiel de renforcement principal (22) au point (211) le plus radialement intérieur du bourrelet (2), et la largeur axiale du bourrelet au seat D, est au plus égal à 0.4.

2. Pneumatique selon la revendication 1, **dans lequel** le rapport Y/D entre la distance axiale Y du point (222) le plus radialement intérieur de l'élément circonférentiel de renforcement principal (22) au point (211) le plus radialement intérieur du bourrelet (2), et la largeur axiale du bourrelet au seat D est au plus égal à 0.75.

3. Pneumatique selon l'une des revendications 1 ou 2, **dans lequel** le rapport Z/D entre la distance radiale Z du point (222) le plus radialement intérieur de l'élément circonférentiel de renforcement principal (22) au point (211) le plus radialement intérieur du bourrelet (2), et la largeur axiale du bourrelet au seat D, est au moins égal à 0.25.

4. Pneumatique selon l'une quelconque des revendications 1 à 3, dans lequel l'extrémité (231) la plus axialement extérieure de la couche de talon (23) est radialement extérieure à l'extrémité (311) la plus radialement intérieure de la couche de carcasse (31) et d'une différence de rayon au moins égale à 10 mm, de préférence au moins égale à 20 mm.

5. Pneumatique selon l'une quelconque des revendications 1 à 4, **dans lequel** l'extrémité (311) de la couche de carcasse (31) la plus radialement intérieure est radialement extérieure au point (223) le plus radialement extérieur de l'élément circonférentiel de renforcement principal (22).

6. Pneumatique selon l'une quelconque des revendications 1 à 5, **dans lequel** l'extrémité (231) de la couche de talon (23) la plus axialement extérieure est axialement extérieure à l'extrémité (311) de la couche de carcasse (31) la plus radialement intérieure.

7. Pneumatique selon l'une quelconque des revendications 1 à 5, **dans lequel** l'extrémité (231) de la couche de talon (23) la plus axialement extérieure est axialement intérieure à l'extrémité (311) de la couche de carcasse (31) la plus radialement intérieure.

8. Pneumatique selon l'une quelconque des revendications 1 à 7, **dans lequel** les éléments de renforcement d'une couche de talon (23) sont en textile, de préférence en polyamide aliphatique, en polyamide aromatique, en une combinaison de polyamide aliphatique et de polyamide aromatique, en polytéréphtalate d'éthylène ou en rayonne.

9. Pneumatique selon l'une quelconque des revendications 1 à 8, **dans lequel** les éléments de renforcement d'une couche de carcasse (31) sont en métal ou en textile, de préférence en polyamide aliphatique, en polyamide aromatique, en une combinaison de polyamide aliphatique et de polyamide aromatique, en polytéréphtalate d'éthylène ou en rayonne.

10. Pneumatique selon l'une quelconque des revendications 1 à 9, **dans lequel** les éléments de renforcement d'une couche de carcasse (31) sont parallèles entre eux et font, avec la direction circonférentielle, un angle compris entre 65° et 115°.

11. Pneumatique selon l'une quelconque des revendications 1 à 10, **dans lequel** les éléments de renforcement d'une couche de talon (23) sont parallèles entre eux et font, avec la direction circonférentielle, un angle compris entre 20° et 160°.

12. Pneumatique selon l'une quelconque des revendications 1 à 11, **dans lequel** le au moins un élément circonférentiel de renforcement additionnel (24) comprend au moins un matériau textile, de préférence un polyamide aliphatique, un polyamide aromatique, un polyester ou une rayonne.

13. Pneumatique selon l'une quelconque des revendications 1 à 12, **dans lequel** pour ledit bourrelet (2), la portion de bourrage (21), au moins radialement intérieure au point (222) le plus radialement intérieur de l'élément circonférentiel de renforcement principal (22), a un module d'élasticité à 10% d'allongement E21 au moins égal à 15 MPa.

14. Pneumatique selon l'une quelconque des revendications 1 à 13, **dans lequel** la portion de bourrage (212) radialement extérieure au point (223) le plus radialement extérieur de l'élément circonférentiel de renforcement principal, a un module d'élasticité à 10% d'allongement E212 inférieur à 0.5 fois le module d'élasticité à 10% d'allongement E21 de la portion de bourrage (21) au moins radialement intérieure au point (222) le plus radialement intérieur de l'élément circonférentiel de renforcement principal (22).

15. Pneumatique selon l'une quelconque des revendications 1 à 14, **dans lequel** la portion de bourrage (213), axialement extérieure au point (223) le plus radialement extérieur de l'élément circonférentiel de renforcement principal, a un module d'élasticité à 10% d'allongement E213 inférieur à 0.5 fois le module d'élasticité à 10% d'allongement E21 de la portion de bourrage (21) au moins radialement intérieure au point (222) le plus radialement intérieur de l'élément circonférentiel de renforcement principal (22).

16. Ensemble monté comprenant un pneumatique selon l'une quelconque des revendications 1 à 15, et une roue possédant au moins un hump dont la hauteur est au moins égale à 1mm.

## Patentansprüche

1. Reifen (1), welcher dazu bestimmt ist, auf einer Montagefelge montiert zu werden, umfassend:
zwei Wülste (2), die dazu bestimmt sind, mit der Montagefelge in Kontakt zu kommen,
wobei jeder Wulst (2) einen radial innersten Punkt (211), eine axiale Breite am Sitz D und eine Außenseite, die aus der mit der Außenumgebung des Reifens in Kontakt befindlichen und zum Wulst gehörenden Oberfläche des Reifens besteht, aufweist und jeder Wulst wenigstens eine Füllung (21), die aus wenigstens einer Kautschukzusammensetzung besteht, und wenigstens ein Umfangsverstärkungselement (22), Hauptumfangsverstärkungselement genannt, umfasst,
wobei der Meridianschnitt des Hauptumfangsverstärkungselements (22) einen radial innersten Punkt (222), einen radial äußersten Punkt (223) und einen axial innersten Punkt (224) aufweist, wobei der radial innerste Punkt (222) in einem radialen Abstand Z und in einem axialen Abstand Y vom radial innersten Punkt (211) des Wulstes positioniert ist,
wobei die axiale Breite am Sitz D zwischen dem radial innersten Punkt des Wulstes (211) und dem Schnittpunkt (228) zwischen einer ersten Geraden (T227), die eine Tangente an die äußere axiale Projektion (227) des radial innersten Punktes (222) des Hauptumfangsverstärkungselements (22) ist, und einer zweiten Geraden (T226), die eine Tangente an die innere radiale Projektion (226) des axial äußersten Punktes (225) des Hauptumfangsverstärkungselements (22) ist, gemessen wird,
eine Karkassenbewehrung, welche die zwei Wülste (2) verbindet und wenigstens eine Karkassenlage (31) umfasst, die sich in jedem Wulst (2) radial nach innen bis zu einem Karkassenlagenende (311) erstreckt,
wobei sich für wenigstens einen Wulst (2) das Karkassenlagenende (311) radial innerhalb des Punktes (301) größter axialer Breite (SM) des Reifens und axial außerhalb des axial innersten Punktes (224) des Hauptumfangsverstärkungselements (22) befindet,
wobei für den besagten Wulst (2) das Verhältnis Y/D zwischen dem axialen Abstand Y des radial innersten Punktes (222) des Hauptumfangsverstärkungselements (22) vom radial innersten Punkt (211) des Wulstes (2) und der axialen Breite des Wulstes am Sitz D mindestens 0,5 beträgt,
wobei der Wulst (2) eine Wulstbewehrung umfasst, die aus wenigstens einer Wulstlage (23) besteht, welche die Füllung (21) umgibt, derart, dass sich das axial äußerste Ende (231) der Wulstlage (23) radial außerhalb des radial innersten Endes (311) der Karkassenlage (31) befindet, und derart, dass sich das axial innerste Ende (232) der Wulstlage (23) wenigstens radial außerhalb des radial innersten Punktes (222) des Hauptumfangsverstärkungselements (22) befindet,
wobei für den Wulst (2) die Punkte der Wulstbewehrung, die radial innerhalb des radial innersten Punktes (222) des Hauptumfangsverstärkungselements (22) positioniert sind, in Bezug auf die Außenseite des Wulstes in einem maximalen Abstand positioniert sind, der höchstens gleich Z/2 ist, der Hälfte des radialen Abstands Z zwischen dem radial innersten Punkt des Wulstes (211) und dem radial innersten Punkt (222) des Hauptumfangsverstärkungselements,
wobei der Wulst (2) wenigstens ein zusätzliches Umfangsverstärkungselement (24) umfasst, das sich axial innerhalb des axial innersten Punktes (224) des Hauptumfangsverstärkungselements (22), radial außerhalb eines radial innersten Teils der Wulstbewehrung (23) und radial innerhalb des radial äußersten Punktes (223) des Hauptumfangsverstärkungselements (22) befindet,
**dadurch gekennzeichnet, dass** für den Wulst (2) das Verhältnis Z/D zwischen dem radialen Abstand Z des radial innersten Punktes (222) des Hauptumfangsverstärkungselements (22) vom radial innersten Punkt (211) des Wulstes (2) und der axialen Breite des Wulstes am Sitz D höchstens 0,4 beträgt.

2. Reifen nach Anspruch 1, wobei das Verhältnis Y/D zwischen dem axialen Abstand Y des radial innersten Punktes (222) des Hauptumfangsverstärkungselements (22) vom radial innersten Punkt (211) des Wulstes (2) und der axialen Breite des Wulstes am Sitz D höchstens 0,75 beträgt.

3. Reifen nach einem der Ansprüche 1 oder 2, wobei das Verhältnis Z/D zwischen dem radialen Abstand Z des radial innersten Punktes (222) des Hauptumfangsverstärkungselements (22) vom radial innersten Punkt (211) des Wulstes (2) und der axialen Breite des Wulstes am Sitz D mindestens 0,25 beträgt.

4. Reifen nach einem der Ansprüche 1 bis 3, wobei sich das axial äußerste Ende (231) der Wulstlage (23) radial außerhalb des radial innersten Endes (311) der Karkassenlage (31) befindet, mit einer Radiusdifferenz, die mindestens 10 mm, vorzugsweise mindestens 20 mm beträgt.

5. Reifen nach einem der Ansprüche 1 bis 4, wobei sich das radial innerste Ende (311) der Karkassenlage (31) radial außerhalb des radial äußersten Punktes (223) des Hauptumfangsverstärkungselements (22) befindet.

6. Reifen nach einem der Ansprüche 1 bis 5, wobei sich das axial äußerste Ende (231) der Wulstlage (23) axial außerhalb des radial innersten Endes (311) der Karkassenlage (31) befindet.

7. Reifen nach einem der Ansprüche 1 bis 5, wobei sich das axial äußerste Ende (231) der Wulstlage (23) axial innerhalb des radial innersten Endes (311) der Karkassenlage (31) befindet.

8. Reifen nach einem der Ansprüche 1 bis 7, wobei die Verstärkungselemente einer Wulstlage (23) aus Textilmaterial bestehen, vorzugsweise aus aliphatischem Polyamid, aus aromatischem Polyamid, aus einer Kombination von aliphatischem Polyamid und aromatischem Polyamid, aus Polyethylenterephthalat oder aus Kunstseide.

9. Reifen nach einem der Ansprüche 1 bis 8, wobei die Verstärkungselemente einer Karkassenlage (31) aus Metall oder aus Textilmaterial bestehen, vorzugsweise aus aliphatischem Polyamid, aus aromatischem Polyamid, aus einer Kombination von aliphatischem Polyamid und aromatischem Polyamid, aus Polyethylenterephthalat oder aus Kunstseide.

10. Reifen nach einem der Ansprüche 1 bis 9, wobei die Verstärkungselemente einer Karkassenlage (31) parallel zueinander sind und mit der Umfangsrichtung einen Winkel zwischen 65° und 115° bilden.

11. Reifen nach einem der Ansprüche 1 bis 10, wobei die Verstärkungselemente einer Wulstlage (23) parallel zueinander sind und mit der Umfangsrichtung einen Winkel zwischen 20° und 160° bilden.

12. Reifen nach einem der Ansprüche 1 bis 11, wobei das wenigstens eine zusätzliche Umfangsverstärkungselement (24) wenigstens ein textiles Material umfasst, vorzugsweise ein aliphatisches Polyamid, ein aromatisches Polyamid, ein Polyester oder eine Kunstseide.

13. Reifen nach einem der Ansprüche 1 bis 12, wobei für den Wulst (2) der Füllungsabschnitt (21), der sich wenigstens radial innerhalb des radial innersten Punktes (222) des Hauptumfangsverstärkungselements (22) befindet, einen Elastizitätsmodul bei 10 % Dehnung E21 aufweist, der mindestens 15 MPa beträgt.

14. Reifen nach einem der Ansprüche 1 bis 13, wobei der Füllungsabschnitt (212), der sich radial außerhalb des radial äußersten Punktes (223) des Hauptumfangsverstärkungselements befindet, einen Elastizitätsmodul bei 10 % Dehnung E212 aufweist, der kleiner als das 0,5-fache des Elastizitätsmoduls bei 10 % Dehnung E21 des Füllungsabschnitts (21) ist, der sich wenigstens radial innerhalb des radial innersten Punktes (222) des Hauptumfangsverstärkungselements (22) befindet.

15. Reifen nach einem der Ansprüche 1 bis 14, wobei der Füllungsabschnitt (213), der sich axial außerhalb des radial äußersten Punktes (223) des Hauptumfangsverstärkungselements befindet, einen Elastizitätsmodul bei 10 % Dehnung E213 aufweist, der kleiner als das 0,5-fache des Elastizitätsmoduls bei 10 % Dehnung E21 des Füllungsabschnitts (21) ist, der sich wenigstens radial innerhalb des radial innersten Punktes (222) des Hauptumfangsverstärkungselements (22) befindet.

16. Montierte Anordnung, welche einen Reifen nach einem der Ansprüche 1 bis 15 und ein Rad, das wenigstens einen Hump besitzt, dessen Höhe mindestens 1 mm beträgt, umfasst.

## Claims

1. Tyre (1) intended to be mounted on a mounting rim, comprising:
two beads (2), which are intended to come into contact with the mounting rim,
each bead (2) having a radially innermost point (211), an axial width at the seat D, and an external face made up of the surface of the tyre in contact with the outside of the tyre and belonging to the bead, and each bead comprising at least one bead filler (21) made up of at least one rubber composition and of at least one circumferential reinforcing element (22) referred to as the main circumferential reinforcing element,
the meridian section of the main circumferential reinforcing element (22) having a radially innermost point (222), a radially outermost point (223) and an axially innermost point (224), the radially innermost point (222) being positioned at a radial distance Z and at an axial distance Y from the radially innermost point (211) of the bead,
the axial width at the seat D being measured between the radially innermost point of the bead (211) and the point of intersection (228) between a first straight line (T227) tangential to the external axial projection (227) of the radially innermost point (222) of the main circumferential reinforcing element (22) and a second straight line (T226) tangential to the internal radial projection (226) of the axially outermost point (225) of the main circumferential reinforcing element (22),
a carcass reinforcement connecting the two beads (2) and comprising at least one carcass layer (31) extending in each bead (2) radially towards the inside as far as a carcass layer end (311),
for at least one bead (2), the carcass layer end (311) is radially on the inside of the point (301) of greatest axial width (SM) of the tyre and axially on the outside of the axially innermost point (224) of the main circumferential reinforcing element (22),
for the said bead (2), the ratio Y/D between the axial distance Y from the radially innermost point (222) of the main circumferential reinforcing element (22) to the radially innermost point (211) of the bead (2), and the axial width of the bead at the seat D, is at least equal to 0.5,
the said bead (2) comprises a bead reinforcement, made up of at least one bead layer (23), which surrounds the bead filler (21) in such a way that the axially outermost end (231) of the bead layer (23) is radially on the outside of the radially innermost end (311) of the carcass layer (31) and such that the axially innermost end (232) of the bead layer (23) is at least radially on the outside of the radially innermost point (222) of the main circumferential reinforcing element (22),
for the said bead (2), the points on the bead reinforcement which are positioned radially on the inside of the radially innermost point (222) of the main circumferential reinforcing element (22) are positioned, with respect to the external face of the bead, at a maximum distance that represents at most Z/2, half the radial distance Z between the radially innermost point of the bead (211) and the radially innermost point of the main circumferential reinforcing element (222),
the said bead (2) comprises at least one additional circumferential reinforcing element (24), axially on the inside of the axially innermost point (224) of the main circumferential reinforcing element (22), radially on the outside of a radially innermost part of the bead reinforcement (23) and radially on the inside of the radially outermost point (223) of the main circumferential reinforcing element (22),
**characterized in that** for the said bead (2), the ratio Z/D between the radial distance Z from the radially innermost point (222) of the main circumferential reinforcing element (22) to the radially innermost point (211) of the bead (2), and the axial width of the bead at the seat D, is at most equal to 0.4.

2. Tyre according to Claim 1, **in which** the ratio Y/D between the axial distance Y from the radially innermost point (222) of the main circumferential reinforcing element (22) to the radially innermost point (211) of the bead (2), and the axial width of the bead at the seat D is at most equal to 0.75.

3. Tyre according to one of Claims 1 and 2, **in which** the ratio Z/D between the radial distance Z from the radially innermost point (222) of the main circumferential reinforcing element (22) to the radially innermost point (211) of the bead (2), and the axial width of the bead at the seat D is at least equal to 0.25.

4. Tyre according to any one of Claims 1 to 3, **in which** the axially outermost end (231) of the bead layer (23) is radially on the outside of the radially innermost end (311) of the carcass layer (31) by a difference in radius at least equal to 10 mm, preferably at least equal to 20 mm.

5. Tyre according to any one of Claims 1 to 4, **in which** the end (311) of the carcass layer (31) that is radially innermost is radially on the outside of the radially outermost point (223) of the main circumferential reinforcing element (22).

6. Tyre according to any one of Claims 1 to 5, **in which** the end (231) of the axially outermost bead layer (23) is axially on the outside of the end (311) of the radially innermost carcass layer (31).

7. Tyre according to any one of Claims 1 to 5, **in which** the end (231) of the axially outermost bead layer (23) is axially on the inside of the end (311) of the radially innermost carcass layer (31).

8. Tyre according to any one of Claims 1 to 7, **in which** the reinforcing elements of a bead layer (23) are made of textile, preferably of aliphatic polyamide, of aromatic polyamide, of a combination of aliphatic polyamide and of aromatic polyamide, of polyethylene terephthalate or of rayon.

9. Tyre according to any one of Claims 1 to 8, **in which** the reinforcing elements of a carcass layer (31) are made of metal or of textile, preferably of aliphatic polyamide, of aromatic polyamide, of a combination of aliphatic polyamide and of aromatic polyamide, of polyethylene terephthalate or of rayon.

10. Tyre according to any one of Claims 1 to 9, **in which** the reinforcing elements of a carcass layer (31) are parallel to one another and make with the circumferential direction an angle of between 65° and 115°.

11. Tyre according to any one of Claims 1 to 10, **in which** the reinforcing elements of a bead layer (23) are parallel to one another and make with the circumferential direction an angle of between 20° and 160°.

12. Tyre according to any one of Claims 1 to 11, **in which** the at least one additional circumferential reinforcing element (24) comprises at least one textile material, preferably an aliphatic polyamide, an aromatic polyamide, a polyester or a rayon.

13. Tyre according to any one of Claims 1 to 12, **in which,** for the said bead (2), the bead filler portion (21), at least radially on the inside of the radially innermost point (222) of the main circumferential reinforcing element (22), has an elastic modulus at 10% elongation E21 at least equal to 15MPa.

14. Tyre according to any one of Claims 1 to 13, **in which** the bead filler portion (212) radially on the outside of the radially outermost point (223) of the main circumferential reinforcing element has an elastic modulus at 10% elongation E212 less than 0.5 times the elastic modulus at 10% elongation E21 of the bead filler portion (21) at least radially on the inside of the radially innermost point (222) of the main circumferential reinforcing element.

15. Tyre according to any one of Claims 1 to 14, **in which** the bead filler portion (213) axially on the outside of the radially outermost point (223) of the main circumferential reinforcing element has an elastic modulus at 10% elongation E213 less than 0.5 times the elastic modulus at 10% elongation E21 of the bead filler portion (21) at least radially on the inside of the radially innermost point (222) of the main circumferential reinforcing element.

16. Mounted assembly comprising a tyre according to any one of Claims 1 to 15 and a wheel possessing at least one hump the height of which is at least equal to 1 mm.
